# EUROPÄISCHE PATENTSCHRIFT

(11) **EP 0 787 317 B1**
(45) Veröffentlichungstag und Bekanntmachung des Hinweises auf die Patenterteilung: **22.07.1998**
(21) Anmeldenummer: 95935883.9
(22) Anmeldetag: 29.09.1995
(51) Int. Cl.: G05B 19/4093

(54) **VERFAHREN UND VORRICHTUNG ZUR STEUERUNG VON FUNKENEROSIONSMASCHINEN**
PROCESS AND DEVICE FOR CONTROLLING EDM MACHINES
PROCEDE ET DISPOSITIF DE COMMANDE DE MACHINES D'ETINCELAGE

(30) Priorität: 17.10.1994 DE 4437057
(43) Veröffentlichungstag der Anmeldung: 06.08.1997
(73) Patentinhaber: A.G. für industrielle Elektronik AGIE Losone bei Locarno, CH-6616 Losone (CH)
(72) Erfinder: MILAN, Massimo, CH-6616 Losone (CH); DE MARIA, Renzo, CH-6500 Bellinzona (CH)
(74) Vertreter: Turi, Michael, Dipl.-Phys.
(86) Internationale Anmeldenummer: EP9503872
(87) Internationale Veröffentlichungsnummer: WO9612218

(56) Entgegenhaltungen:
- WO-A-95/07504
- DE-A- 4 105 291
- US-A- 4 586 151
- PATENT ABSTRACTS OF JAPAN vol. 10 no. 21 (M-449) ,28.Januar 1986 & JP,A,60 180747 (YAMAZAKI) 14.September 1985,

## Beschreibung

Die Erfindung betrifft ein Verfahren und eine Vorrichtung zur Steuerung von Funkenerosionsmaschinen bzw. Funkenerosionsvorrichtungen.

Derartige Maschinen werden u.a. zur Fertigung von Stempeln und/oder Matrizen aus leitenden Materialien eingesetzt. Sie werden in der Regel mittels elektronischer Steuereinrichtungen betrieben, welche Steuerungseingaben in Steuersignale für den Betrieb der Maschine umwandeln. Vorteilhaft ist dabei die extrem hohe Präzision: die resultierenden Formen entsprechen mit einer Genauigkeit in der Größenordnung von Mikrometern den gewünschten Abmessungen. Nachteilhaft ist hingegen der enorme Fertigungsaufwand. Eine wirtschaftlich sinnvolle Verwendung solcher Maschinen besteht daher häufig in der Anfertigung beispielsweise von Gußformen, aber nur selten in der seriellen Fertigung von Endformen. Hieraus ergibt sich die Notwendigkeit, im Normalbetrieb einer Funkenerosionsmaschine vor der Bearbeitung jedes einzelnen zu bearbeitenden Werkstücks die jeweils nur für das betreffende Werkstück gültigen Steuerdaten einzugeben. Neben Lage- und/oder Bahnkoordinaten der gewünschten Schnitte müssen dabei beispielsweise die folgenden Faktoren berücksichtigt werden: Material; erwünschte Bearbeitungsqualität, zB. Rauheit, Genauigkeit; benötigte Elektrode(n); Reihenfolge der vorzunehmenden Bearbeitungsschritte; etc..

Insbesondere bei Drahterosionsmaschinen, welche mittels einer Drahtelektrode Stempel oder Matrizen ausschneiden, kann es problematisch sein, die Reihenfolge der vorzunehmenden Bearbeitungsschritte festzulegen. Beispielsweise wird hier zwischen Voll-, Trenn- und Nachschnitten unterschieden. Mit "Vollschnitt" bezeichnet man dabei in der Regel den Schnitt längs des größten Teils einer gewünschten Schnittbahn. Lediglich ein relativ kleiner Teil der Bahn bleibt zunächst unbearbeitet und wird erst nachträglich in einem "Trennschnitt" abgearbeitet. Dies hat den Sinn, ein unkontrolliertes Herausfallen des Stempels aus dem Werkstück, durch welches das Werkstück und/oder die Maschine beschädigt werden könnte, zu vermeiden. Es ist daher beispielsweise üblich, im automatischen Betrieb der Erosionsmaschine zunächst alle Vollschnitte durchzuführen. Dabei ist es regelmäßig nicht notwendig, daß ein Operateur anwesend ist. Für die Trennschnitte versucht man hingegen, einen Zeitpunkt zu wählen, an dem der Operateur anwesend sein und eine kontrollierte Entnahme des herausfallenden Stempels gewährleisten kann.

Als "Nachschnitt" bzw. auch "Feinschnitte" bezeichnet man ein - nach vollzogenem Voll- bzw. Trennschnitt - nochmaliges bzw. wiederholtes erosives Abfahren der Schnittbahn, um die gewünschte Bearbeitungsqualität zu erreichen. Da regelmäßig eine extrem hohe Präzision erwünscht ist, müssen dabei die unterschiedlichsten Faktoren, insbesondere Störfaktoren, berücksichtigt werden. Dazu können beispielsweise Umwelteinflüsse, Betriebszeiten benachbarter Maschinen, welche Vibrationen erzeugen, Verkehrszeiten nahegelegener Flughäfen, Bahnlinien, Bahnhöfe, Autostraßen, etc., aber auch besonderes innerbetriebliches Bearbeitungs-know-how, etc. gehören. Abgesehen vom gewünschten Schnittmuster müssen also bei der Steuerung von Erosionsmaschinen noch vielfältige weitere Faktoren berücksichtigt werden.

Dem Stand der Technik entsprechende Verfahren zur Steuerung von Funkenerosionsmaschinen benötigen Steuerungseingaben in der Form abgeschlossener "Programme" , sog. Steuerprogramme. Ein solches Programm umfaßt alle Steuerungseingaben und legt beispielsweise fest, welche Schnitte in welcher Qualität, d.h. mit wievielen Nachschnitten, an welcher Stelle im zu bearbeitenden Werkstück in welcher Reihenfolge etc. durchgeführt werden sollen. Dabei ist es üblich, Sonderabläufe für Störfälle etc. vorzusehen. Die Bearbeitung des Werkstücks erfolgt nach Abschluß der Eingabe aller für die vollständige Bearbeitung des Werkstücks notwendigen Steuerungsdaten. Der Bearbeitungsablauf ist durch das abgeschlossene Programm fest vorgegeben und kann während der Bearbeitung des Werkstücks nicht geändert werden. Etwaige Variationen sind nur im Rahmen der ebenfalls vor Beginn des Bearbeitungsvorgangs festgelegten Sonderabläufe möglich. Nachträgliche Korrekturen setzen voraus, daß der Arbeitsablauf angehalten, ein verändertes Steuerprogramm erstellt und ein neuer Arbeitsablauf gestartet wird. Das Erfordernis, Steuerdaten für die funkenerosive Bearbeitung als abgeschlossene Programme einzugeben, vermindert die Bedienerfreundlichkeit von Funkenerosionsmaschinen somit beträchtlich.

Eine derartig ausgestaltete Funkenerosionsmaschine wird etwa in der DE - A - 41 05 291 beschrieben.

Ein allgemeines Verfahren zur Programmierung und Steuerung einer Mehrzahl von Robotermodulen liefert die US - A - 4 586 151. Dabei werden "work tasks" definiert und entsprechende Subroutinen verfaßt. Die Subroutinen umfassen die für die Ausführung einer Aufgabe nötigen Parameter. Sie werden mit Namen versehen und in einem Verzeichnis abgelegt. Ein Programm besteht aus einer Liste solcher Namen. Es legt auf diese Weise detailiert fest, in welcher Reihenfolge welche konkreten Aufgaben ausgeführt werden.

Der vorliegenden Erfindung liegt die Aufgabe zugrunde, diesem und den daraus resultierenden Nachteilen weitgehend abzuhelfen und somit Funkenerosionsmaschinen hinsichtlich ihrer Bedienerfreundlichkeit und Effizienz zu verbessern.

Erfindungsgemäß wird dieses Ziel durch die Gegenstände der Ansprüche 1 und 10 erreicht.

Danach schafft die Erfindung ein Verfahren zur Steuerung einer Funkenerosionsmaschine und eine Vorrichtung insbesondere zur Durchführung dieses Verfahrens, bei welchen die benötigten Steuerungseingaben während und/oder nach ihrer Eingabe in eine Steuereinrichtung einerseits in objektbezogene, d.h. die einzelnen Arbeitschritte unmittelbar betreffende, und andererseits in strategische, d.h. die Abfolge der Arbeitsschritte der Maschine betreffende Eingaben unterteilt und entsprechend unterschiedlich weiterverarbeitet werden. Dabei verfügt die Vorrichtung über jeweils mindestens eine Eingabeeinrichtung und eine Recheneinrichtung, welche derart ausgelegt ist, daß die benötigten Steuerungseingaben einerseits in objektbezogene und andererseits in strategische Eingaben unterteilt und entsprechend unterschiedlich weiterverarbeitet werden können. Vorzugsweise umfaßt die erfindungsgemäße Steuervorrichtung auch eine Speichereinrichtung und/oder eine Mitteilungseinrichtung.

Auf diese Weise wird das dem Stand der Technik entsprechende abgeschlossene und unveränderliche Steuerungsprogramm zur Bestimmung des Arbeitsablaufs aufgelöst. An seine Stelle treten zwei Gruppen unterschiedlicher Steuerungseingaben, deren prinzipiell ungebundene und mannigfaltige Eigenart vielfältige neuartige Handhabungsmöglichkeiten für Steuerungseinrichtungen von Funkenerosionsmaschinen erschließen.

Bei einer vorteilhaften Ausgestaltung der Erfindung werden die objektbezogenen Eingaben in der Steuereinrichtung in Gruppen zusammengefaßt, welche jeweils die für einen einzelnen Arbeitsschritt notwendigen Steuereingaben, insbesondere die Lage-, Bahn- und/oder Schrittgeschwindigkeitsdaten, sowie mindestens ein individualisierendes Merkmal beinhalten. Auf diese Weise erhält man Programmbausteine, welche über ihre individualisierenden Merkmale in beliebiger Reihenfolge zur Steuerung der Erosionsmaschine herangezogen werden können.

Bei einer weiteren vorteilhaften Ausgestaltung wird durch die Steuereinrichtung aufgrund der strategischen Eingaben die Reihenfolge festgelegt, in welcher die einzelnen Gruppen von objektbezogenen Eingaben zur Steuerung der Erosionsmaschine herangezogen werden.

Bei einer weiteren vorteilhaften Ausgestaltung der Erfindung nehmen die strategischen Eingaben in der Steuereinrichtung auf die individualisierenden Merkmale der Gruppen von objektbezogenen Eingaben derart Bezug, daß die Reihenfolge der Ausführung der entsprechenden Arbeitsschritte festgelegt wird.

Vorzugsweise werden durch die strategischen Eingaben anhand der Recheneinrichtung eine für einen störungsfreien Betrieb bevorzugte Reihenfolge der Arbeitsschritte oder eine oder mehrere alternative Reihenfolgen der Arbeitsschritte für den Eintritt potentieller Störungen festgelegt. Tritt bei der vorgenannten Ausführung nach der ersten Alternative trotzdem eine Störung auf, so werden die "gestörten" Arbeitsschritte, d.h. diejenigen, welche die Störung verursachen, vorerst übersprungen und zu einem späteren Zeitpunkt vollendet. Mit anderen Worten umfassen die den einzelnen Arbeitsschritten zugeordneten Daten auch den Stand ihrer Ausführung bzw. Abarbeitung, z.B. durchgeführt, noch zu erledigen, unterbrochen in Punkt X, etc.. Es ist daher möglich die Abarbeitung von Arbeitsschritten (Jobs) bei etwaiger Störung zu unterbrechen, zur Ausführung eines anderen Jobs zu wechseln, und in einer zweiten Phase - nach Analyse und ggf. Behebung der Störung - die Ausführung des ersten Jobs vom gespeicherten Punkt der Unterbrechung ausgehend wieder aufzunehmen.

Bei einer weiteren vorteilhaften Ausgestaltung der Erfindung werden die strategischen Eingaben in funktionale Einheiten untergliedert (und so in der Steuereinrichtung verarbeitet), von denen jede einzelne für sich genommen ausreicht, den/die durch sie festgelegten Arbeitsschritte auszuführen. Dies hat gegenüber einem Steuerungsprogramm nach dem Stand der Technik den Vorteil, daß im Betrieb der Erosionsmaschine die noch nicht abgearbeiteten funktionalen Einheiten jederzeit verändert oder ergänzt werden können. Beispielsweise wird so die Möglichkeit eines sog. "Quick-Start" geschaffen: während es bisher notwendig ist, vor den eigentlichen Betrieb einer Funkenerosionsmaschine eine langwierige Programmierphase -normale Dauer in der Größenordnung von einer halben bis einer Stunde- vorzuschalten, um ein abgeschlossenes Programm zu schaffen, kann man nun bereits nach der Eingabe einer ersten funktionalen Einheit, also bereits nach wenigen Minuten, die Erosionsmaschine starten. Die Eingabe der verbleibenden Steuerdaten kann danach erfolgen. Dies entspricht einer Effizienzsteigerung in der Größenordnung von zehn bis zwanzig Prozent.

Bei einer weiteren vorteilhaften Ausgestaltung werden die Gruppen von objektbezogenen Eingaben in einem Zwischenspeicher der Steuereinrichtung in beliebiger Reihenfolge zwischengespeichert. Dies hat den Vorteil, daß die Eingabe der nötigen Steuerdaten "chaotisch", d.h. in beliebiger Reihenfolge erfolgen kann. Der Operateur kann dabei beispielsweise einer beliebigen, individuellen Systematik folgen, ohne berücksichtigen zu müssen, welche Reihenfolge aus technischen Gründen richtig wäre.

Bevorzugt durchsucht die Steuereinrichtung den Zwischenspeicher mindestens einmal nach den im jeweiligen Arbeitsabschritt aufgrund der strategischen Eingaben auszuführenden Gruppen von objektbezogenen Eingaben, wählt die gewünschten Gruppen anhand ihrer individualisierenden Merkmale aus, ruft sie aus dem Zwischenspeicher ab und zieht sie zur Steuerung der Erosionsmaschine heran. Bei einer weiteren vorteilhaften Ausgestaltung des erfindungsgemäßen Verfahrens wird dieser Schritt wiederholt durchgeführt. Auf diese Weise können auch sehr kurzfristig erfolgte Änderungen berücksichtigt werden.

Bei einer weiteren vorteilhaften Ausgestaltung ist die Steuereinrichtung derart ausgelegt, daß während des Betriebs der Erosionsmaschine wahlweise weitere objektbezogene Eingaben und/oder die Veränderung bereits vorhandener objektbezogener Eingaben betreffende Eingaben vorgenommen werden.

Bei einer weiteren vorteilhaften Ausgestaltung der Erfindung werden die strategischen Eingaben vom konkreten Anwendungsfall abstrahiert, mindestens einem individualisierenden Merkmal zugeordnet und gemeinsam mit diesem abgespeichert. Dies hat den Vorteil, daß beispielsweise betriebliches Know-How bezüglich günstiger Schnittreihenfolgen nach einmaliger Eingabe jederzeit wieder abgerufen werden kann. Auf diese Weise wird der Programmieraufwand im Betrieb der Maschine erheblich reduziert bzw. vereinfacht.

Bei einer weiteren vorteilhaften Ausgestaltung der Erfindung wird mittels der Steuereinrichtung vor und/oder während des Betriebs der Erosionsmaschine laufend überprüft, ob die strategischen und/oder die die Arbeitsschritte unmittelbar betreffenden Eingaben mit einem ordnungsgemäßen Betrieb der Erosionsmaschine zu vereinbaren sind. Gegebenenfalls werden sie durch geeignete vorgegebene und dauerhaft abgespeicherte Eingaben ersetzt und/oder fehlerhafte Eingaben über eine Mitteilungseinrichtung mitgeteilt.

Im folgenden wird eine bevorzugte Ausgestaltung des/der erfindungsgemäßen Verfahrens und Vorrichtung anhand der beigefügten Zeichnung beispielhaft dargestellt. Daraus ergeben sich weitere Vorteile der Erfindung. In der Zeichnung ist:
Fig.1 eine schematische Darstellung einer einem erfindungsgemäßen Verfahren entsprechenden Steuerungsstruktur ohne aktuelle Änderungen der Steuerungseingaben;
Fig.2 eine schematische Darstellung einer einem erfindungsgemäßen Verfahren entsprechenden Steuerungsstruktur mit aktuellen Änderungen der Steuerungseingaben; und
Fig.3 ein schematische Darstellung einer Steuerungsstruktur nach dem Stand der Technik.

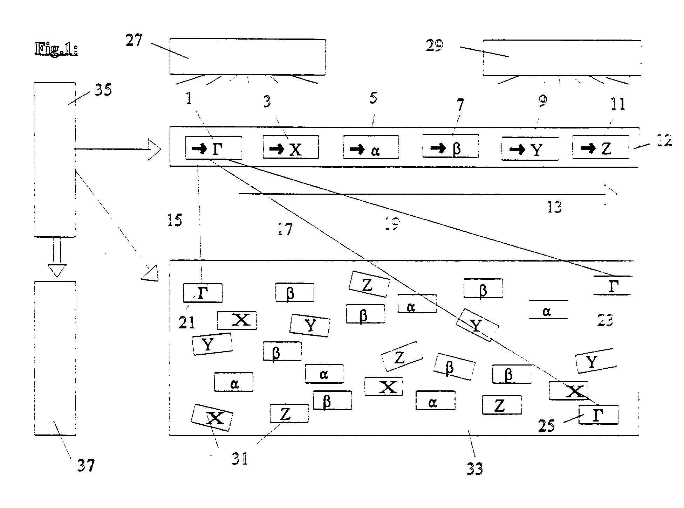

In Figur 1 sind bereits einige Steuerungseingaben erfolgt. Die strategischen Eingaben, welche die Abfolge der Arbeitsschritte in einer Maschine betreffen, sind in funktionale Einheiten 1-11 gegliedert. Sie sind in einem Arbeitsspeicher 12 linear, d.h. nacheinancder angeordnet und werden in der durch Pfeil 13 angedeuteten Reihenfolge abgearbeitet. Im dargestellten Verfahrensabschnitt befindet sich die funktionale Einheit 1 in der Phase ihrer Umsetzung. Sie nimmt Bezug auf ihr zugeordnete Gruppen objektbezogener Eingaben, die bestimmte Arbeitschritte unmittelbar festlegen, z.B. Voll-, Nach- und/oder Trennschnitte und hier durch das individualisierende Merkmal "Gamma" gekennzeichnet sind. Dies wird durch das Symbol Pfeil/Gamma und die Verbindungspfeile 15, 17 und 19 zwischen der funktionalen Einheit 1 und den Gruppen objektbezogener Eingaben 21, 23 und 25 in der Darstellung angedeutet. Die Reihenfolge und der Inhalt der funktionalen Einheiten 1-11 kann ganz oder teilweise aus einem Speicher 27 entnommen, oder aber ganz oder teilweise über eine Eingabeeinrichtung 29 neu eingegeben worden sein.

Die Gruppen objektbezogener Eingaben 21, 23, 25 und 31 sind durch die Merkmale Alpha, Beta, Gamma, x, y und z individualisiert und enthalten jeweils die für einen einzelnen Arbeitsschritt notwendigen Steuereingaben, insbesondere die Lage-, Bahn- und/oder Schrittgeschwindigkeitsdaten. Sie sind in einem Zwischenspeicher 33 in willkürlicher Reihenfolge abgespeichert und können ebenso wie die funktionalen Einheiten aus einem Speicher 27 abgerufen oder über eine Eingabeeinrichtung 29 neu eingegeben worden sein. Dabei können Speicher 27 und Speicher 33 beliebig ausgestaltete unabhängige Speichereinrichtungen, oder aber Bereiche in einem einzigen Speicher sein. Eine Steuereinrichtung 35 wandelt im dargestellten Verfahrensstadium die objektbezogenen Eingaben 21, 23, 25 in Steuersignale für den Betrieb der Erosionsmaschine 37 um. Sie hat zuvor den Zwischenspeicher 33 nach objektbezogenen Gruppen durchsucht, welche durch das Merkmal Gamma individualisiert sind. Diese werden in der Reihenfolge, in der sie aufgefunden wurden, abgearbeitet. Im Anschluß wird die funktionale Einheit 1 aus dem Arbeitsspeicher 12 entfernt oder jedenfalls anderweitig abgelegt oder als abgearbeitet aus dem weiteren Bearbeitungsverfahren herausgenommen, und die funktionale Einheit 3 wird sodann in der gleichen Weise abgearbeitet. Die übrigen funktionalen Einheiten 5-11 folgen.

Die objektbezogenen Gruppen 21, 23, 25 und 31 werden nach ihrer (ersten) Abarbeitung nicht aus dem Zwischenspeicher 33 entfernt. So ist es möglich, beispielsweise bei -auf Voll- und Trennschnitte folgenden- Nachschnitten auf die durch sie beschriebenen Bahnkoordinaten zurückzugreifen. Es wäre aber auch möglich, sie aus dem Zwischenspeicher 33 zu entfernen, wenn man hierauf keinen Wert legt. Möglich wäre ferner eine automatische Festlegung von Voll- und Trennschnittbereich bei vorgegebener Schnittbahn.

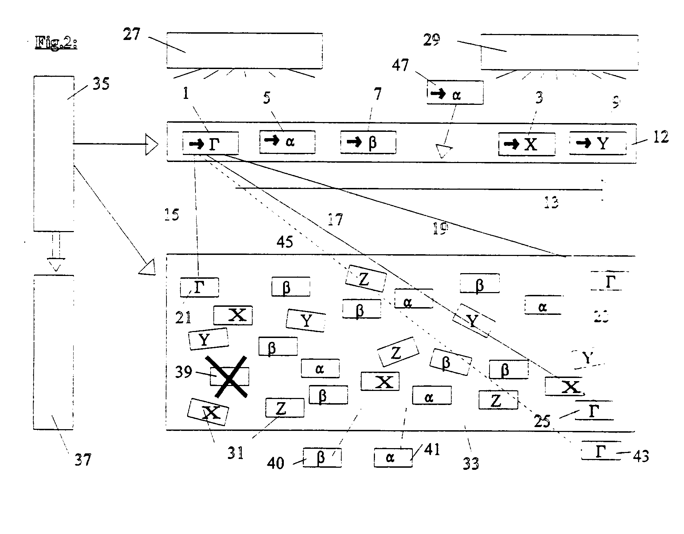

In Fig. 2 wird das gleiche Verfahrensstadium wie in Fig. 1 dargestellt. Abgearbeitet wird gerade die funktionale Einheit 1, welche auf objektbezogene Gruppen, die durch "Gamma" individualisiert sind, Bezug nimmt. Gleichzeitig wurden und werden während des Verfahrenablaufes verschiedene Änderungen vorgenommen. Beispielsweise wurde die Reihenfolge der funktionalen Einheiten 3-9 vertauscht und die Einheit 11 weggelassen. Dies kann automatisch, beispielsweise aufgrund von aufgetretenen Fehlern ebenso erfolgt sein, wie über manuelle Änderungen des Operateurs, der beispielsweise neue Kenntnisse über äußere Störquellen etc. berücksichtigen wollte. Entscheidend ist dabei lediglich die prinzipiell unbegrenzte Gestaltungsfreiheit und somit Flexibilität des erfindungsgemäßen Verfahrens, die diesbezüglich gegeben ist. Ferner werden gerade weitere objektbezogene Gruppen 40, 41 und 43, sowie die funktionale Einheit 47 eingegeben und die objektbezogene Gruppe 39 gelöscht. Auch hiervon wird der laufende Betrieb der Erosionsmaschine 37 nicht berührt.

Gestaltet man das erfindungsgemäße Verfahren in der Art, daß wiederholt auch während der Abarbeitung der funktionalen Einheit 1 der Zwischenspeicher 33 nach objektbezogenen Gruppen, welche beispielsweise durch "Gamma" individualisiert sind, abgesucht wird, so kann auch die Neueingabe einer vierten derartigen Gruppe 43 noch berücksichtigt werden (angedeutet durch Pfeil 45).

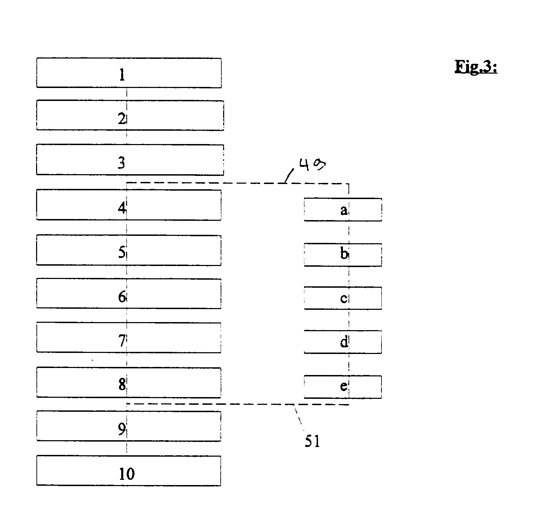

In Figur 3 schließlich wird zum Vergleich ein dem Stand der Technik entsprechendes Steuerungsprogramm skizziert. Hier werden die objektbezogenen und die strategischen Eingaben zusammenhängend eingegeben und linear abgearbeitet. Ausnahmen bieten nur vorprogrammierte Verzweigungsstellen 49 und 51, die jedoch an fest vorgegebenen Programmabschnitten abgearbeitet werden. Ein korrektiver Eingriff während des Verfahrensablaufes ist nicht möglich.

## Patentansprüche

1. Verfahren zur Steuerung einer Funkenerosionsmaschine (37) mittels einer Steuereinrichtung (35), bei welchem
a) objektbezogene, d.h. die einzelnen Arbeitsschritte unmittelbar betreffende Eingaben in Gruppen (21-25, 31, 40-43) zusammengefaßt werden;
b) diese Gruppen (21-25, 31, 40-43) jeweils die für einen einzelnen Arbeitsschritt notwendigen Steuereingaben, insbesondere die Lage-, Bahn- und/oder Schrittgeschwindigkeitsdaten, beinhalten;
c) die Zugehörigkeit dieser Gruppen (21-25, 31, 40-43) zu bestimmten Bearbeitungstypen, insbesondere bestimmten Schnittypen, durch individualisierende Merkmale gekennzeichnet wird;
d) strategische , d.h. die Abfolge der Arbeitsschritte der Maschine betreffende Eingaben, auf die individualisierenden Merkmale der Gruppen von objektbezogenen Eingaben (21-25, 31, 40-43) Bezug nehmen;
e) die Steuereinrichtung (35) aufgrund einer strategischen Eingabe einen Zwischenspeicher (33) nach Gruppen von objektbezogenen Eingaben (21-25, 31, 40-43) mit einem entsprechenden individualisierenden Merkmal durchsucht;
f) die Steuereinrichtung (35) dabei aufgefundene Gruppen von objektbezogenen Eingaben (21-25, 31, 40-43) desselben Bearbeitungstyps zur Ausführung bringt; und
g) mittels einer Mehrzahl strategischer Eingaben eine Reihenfolge der unterschiedlichen Bearbeitungstypen festgelegt wird.

2. Verfahren nach Anspruch 1, dadurch gekennzeichnet, daß durch die strategischen Eingaben eine für einen störungsfreien Betrieb bevorzugte Reihenfolge der Arbeitsschritte oder eine oder mehrere alternative Reihenfolgen der Arbeitsschritte für den Eintritt potentieller Störungen festgelegt werden.

3. Verfahren nach einem der vorstehenden Ansprüche, dadurch gekennzeichnet, daß die strategischen Eingaben in funktionale Einheiten (1-11, 47) untergliedert werden, von denen jede einzelne für sich genommen ausreicht, den/die durch sie festgelegten Arbeitsschritte auszuführen.

4. Verfahren nach einem der vorstehenden Ansprüche, dadurch gekennzeichnet, daß die Gruppen von objektbezogenen Eingaben (21-25, 31, 40-43) in einem Zwischenspeicher (33) der Steuereinrichtung (37) in beliebiger Reihenfolge zwischengespeichert werden.

5. Verfahren nach Anspruch 4, dadurch gekennzeichnet, daß die Steuereinrichtung (35) den Zwischenspeicher (33) mindestens einmal nach den im jeweiligen Arbeitsabschritt aufgrund der strategischen Eingaben auszuführenden Gruppen von objektbezogenen Eingaben (21-25, 31, 40-43) durchsucht, die gewünschten Gruppen anhand ihrer individualisierenden Merkmale auswählt, aus dem Zwischenspeicher (33) abruft und zur Steuerung der Erosionsmaschine (37) heranzieht.

6. Verfahren nach Anspruch 4, dadurch gekennzeichnet, daß die Steuereinrichtung (35) den Zwischenspeicher (33) wiederholt nach den im jeweiligen Arbeitsabschnitt aufgrund der strategischen Eingaben auszuführenden Gruppen von objektbezogenen Eingaben (21-25, 31, 40-43) durchsucht, die gewünschten Gruppen anhand ihrer individualisierenden Merkmale auswählt, aus dem Zwischenspeicher (33) abruft und zur Steuerung der Erosionsmaschine (37) heranzieht.

7. Verfahren nach einem der vorstehenden Ansprüche, dadurch gekennzeichnet, daß während des Betriebs der Erosionsmaschine (37) wahlweise weitere objektbezogene Eingaben und/oder die Veränderung bereits vorhandener objektbezogener Eingaben (21-25, 31, 40-43) betreffende Eingaben vorgenommen werden.

8. Verfahren nach einem der vorstehenden Ansprüche, dadurch gekennzeichnet, daß die strategischen Eingaben vom konkreten Anwendungsfall abstrahiert, mindestens einem individualisierenden Merkmal zugeordnet und gemeinsam mit diesem abgespeichert werden.

9. Verfahren nach einem der vorstehenden Ansprüche, dadurch gekennzeichnet, daß mittels der Steuereinrichtung (35) vor und/oder während des Betriebs der Erosionsmaschine (37) laufend überprüft wird, ob die strategischen und/oder die die Arbeitsschritte unmittelbar betreffenden Eingaben mit einem ordnungsgemäßen Betrieb der Erosionsmaschine (37) zu vereinbaren sind und sie gegebenenfalls durch geeignete vorgegebene und dauerhaft abgespeicherte Eingaben ersetzt und/oder fehlerhafte Eingaben über eine Mitteilungseinrichtung mitgeteilt werden.

10. Vorrichtung zur Steuerung einer Funkenerosionsmaschine (37), insbesondere zur Durchführung eines der in den vorstehenden Ansprüchen beschriebenen Verfahren, welche jeweils wenigstens eine Eingabeeinrichtung und eine Recheneinrichtung (35) beinhaltet, welche derart ausgelegt ist, daß
a) objektbezogene, d.h. die einzelnen Arbeitsschritte unmittelbar betreffende Eingaben in Gruppen (21-25, 31, 40-43) zusammenfaßbar sind, so daß diese Gruppen (21-25, 31, 40-43) jeweils die für einen einzelnen Arbeitsschritt notwendigen Steuereingaben, insbesondere die Lage-, Bahn- und/oder Schrittgeschwindigkeitsdaten, beinhalten;
b) die Zugehörigkeit dieser Gruppen (21-25, 31, 40-43) zu bestimmten Bearbeitungstypen, insbesondere bestimmten Schnittypen, durch individualisierende Merkmale kennzeichenbar ist;
c) durch strategische , d.h. die Abfolge der Arbeitsschritte der Maschine betreffende Eingaben, auf die individualisierenden Merkmale der Gruppen von objektbezogenen Eingaben (21-25, 31, 40-43) Bezug genommen wird;
d) die Steuereinrichtung (35) aufgrund einer strategischen Eingabe einen Zwischenspeicher (33) nach Gruppen von objektbezogenen Eingaben (21-25, 31, 40-43) mit einem entsprechenden individualisierenden Merkmal durchsucht;
e) die Steuereinrichtung (35) dabei aufgefundene Gruppen von objektbezogenen Eingaben (21-25, 31, 40-43) desselben Bearbeitungstyps zur Ausführung bringt; und
f) mittels einer Mehrzahl strategischer Eingaben eine Reihenfolge der unterschiedlichen Bearbeitungstypen festlegbar ist.

11. Vorrichtung nach Anspruch 10, dadurch gekennzeichnet, daß die Recheneinrichtung derart ausgelegt ist, daß anhand der strategischen Eingaben eine für einen störungsfreien Betrieb bevorzugte Reihenfolge der Arbeitsschritte oder eine oder mehrere alternative Reihenfolgen der Arbeitsschritte für den Eintritt potentieller Störungen festgelegbar sind.

12. Vorrichtung nach einem der vorstehenden Ansprüche 10 oder 11, dadurch gekennzeichnet, daß die Steuereinrichtung die strategischen Eingaben in funktionalen Einheiten (1-11, 47) verarbeitet, von denen jede einzelne für sich genommen ausreicht, den/die durch sie festgelegten Arbeitsschritt(e) auszuführen.

13. Vorrichtung nach einem der vorstehenden Ansprüche 10 bis 12, dadurch gekennzeichnet, daß Steuereinrichtung derart ausgelegt ist, daß die Gruppen von objektbezogenen Eingaben (21-25, 31, 40-43) in einem Zwischenspeicher (33) der Steuereinrichtung in beliebiger Reihenfolge zwischengespeichbar sind.

14. Vorrichtung nach Anspruch 13, dadurch gekennzeichnet, daß die Steuereinrichtung derart ausgelegt ist, daß der Zwischenspeicher (33) wiederholt nach den im jeweiligen Arbeitsabschnitt aufgrund der strategischen Eingaben auszuführenden Gruppen von objektbezogenen Eingaben (21-25, 31, 40-43) durchsucht, die gewünschten Gruppen anhand ihrer individualisierenden Merkmale ausgewählt, aus dem Zwischenspeicher (33) abrufbar und zur Steuerung der Erosionsmaschine (37) verwendbar sind.

15. Vorrichtung nach den Ansprüchen 13 und 14, dadurch gekennzeichnet, daß die Steuereinrichtung derart ausgelegt ist, daß während des Betriebs der Erosionsmaschine (37) wahlweise weitere objektbezogene Eingaben und/oder die Veränderung bereits vorhandener objektbezogener Eingaben (21-25, 31, 40-43) betreffende Eingaben durchführbar sind.

16. Vorrichtung nach einem der vorstehenden Ansprüche 10 bis 15, dadurch gekennzeichnet, daß die Steuereinrichtung derart ausgelegt ist, daß die strategischen Eingaben vom konkreten Anwendungsfall abstrahiert, mindestens einem individualisierenden Merkmal zugeordnet und gemeinsam mit diesem speicherbar sind.

17. Vorrichtung nach einem der vorstehenden Ansprüche 10 bis 16, dadurch gekennzeichnet, daß die Recheneinrichtung derart ausgelegt ist, daß vor und/oder während des Betriebs der Erosionsmaschine (37) laufend überprüft werden kann, ob die strategischen und/oder die die Arbeitsschritte unmittelbar betreffenden Eingaben mit einem ordnungsgemäßen Betrieb der Erosionsmaschine (37) zu vereinbaren sind und sie gegebenenfalls durch geeignete vorgegebene und dauerhaft abgespeicherte Eingaben ersetzbar und/oder fehlerhafte Eingaben über eine Mitteilungseinrichtung übermittelbar sind.

## Claims

1. Method for controlling an EDM machine (37) using a controller (35), wherein
a) object-oriented input data, i.e. data relating directly to individual jobs, are combined into groups (21-25, 31, 40-43);
b) each of these groups(21-25,31,40-43)comprises the control input data required for an individual job, in particular the position, path and/or cutting speed data;
c) the association of these groups (21-25, 31, 40-43) with certain types of processes, in particular certain types of cuts, is characterized by characterizing features;
d) strategic input data, i.e. data relating to the sequence of jobs in the machine, refer to the characterizing features of the groups (21-25, 31, 40-43) of object-oriented input data;
e) the controller (35) searches - on the basis of a strategic input data point - an intermediate storage (33) for groups of object-oriented input data (21-25, 31, 40-43) having one of corresponding characterizing features;
f) the controller (35) processes groups of object-oriented input data (21-25, 31, 40-43) of the same process type so located; and
g) a sequence of the different process types is defined by a plurality of strategic input data.

2. Method according to claim 1, characterized in that the strategic input data define a preferred sequence of jobs for a trouble-free operation or one or more alternate orders of the jobs in the event of potentional malfunctions.

3. Method according to one of the preceding claims, characterized in that the strategic input data are subdivided into functional units (1-11, 47), wherein any one of these units taken alone is sufficient for executing the job(s) defined by the unit.

4. Method according to one of the preceding claims, characterized in that the groups of object-related input data (21-25, 31, 40-43) are temporarily stored in arbitrary order in an intermediate storage (33) of the controller (35).

5. Method according to claim 4, characterized in that the controller (35) searches the intermediate storage (33) at least once for groups of object-oriented input data (21-25, 31, 40-43) which during the respective job are to be executed on the basis of the strategic input data, selects the desired groups based on their characterizing features, recalls these desired groups from the intermediate storage (33) and uses these desired groups for controlling the EDM machine (37).

6. Method according to claim 4, characterized in that the controller (35) repeatedly searches the intermediate storage (33) for groups of object-oriented input data (21-25, 31, 40-43) which during the respective job are to be executed on the basis of the strategic input data, selects the desired groups based on their characterizing features, recalls these desired groups from the intermediate storage (33) and uses these desired groups for controlling the EDM machine (37).

7. Method according to one of the preceding claims, characterized in that optionally, during the operation of the EDM machine, additional object-oriented input data are entered and/or input data relating to already existing object-related input data (21-25, 31, 40-43) are changed.

8. Method according to one of the preceding claims, characterized in that the strategic input data are abstracted from the concrete application, assigned to at least one characterizing feature and stored in common with said feature.

9. Method according to one of the preceding claims, characterized in that the controller (35) continously checks before and/or during the operation of the EDM machine (37), if the strategic input data and/or the input data directly relating to the jobs conform to an orderly operation of the EDM machine (37) and if these input data should be replaced by suitably preset and permanently stored input data and/or if defective input data are to be indicated by a messaging unit.

10. Apparatus for controlling an EDM machine (37), in particular for performing a process described in the preceding claims, the apparatus comprising at least one input device and a computing device which is constructed in such a way that
a) object-oriented input data, i.e. data relating directly to individual jobs, are combined in groups (21-25, 31, 40-43) in such a way that each of these groups (21-25, 31, 40-43) comprises the control input data, in particular the position, path and/or cutting speed data;
b) the association of these groups (21-25, 31, 40-43) with certain types of processes, in particular certain types of cuts, can be characterized by characterizing features;
c) strategic input data, i.e. data relating to the sequence of jobs in the machine, refer to the characterizing features of the groups (21-25, 31, 40-43) of object-oriented input data;
d) the controller (35) searches - on the basis of a strategic input data point - an intermediate storage (33) for groups of object-oriented input data (21-25, 31, 40-43) with one of corresponding characterizing features;
e) the controller (35) processes groups of object-oriented input data (21-25, 31, 40-43) of the same process type located in the previous step; and
f) a sequence of the different process types can be defined through a plurality of strategic input data.

11. Apparatus according to claim 10, characterized in that the controller is constructed in such a way that based on the strategic input data, there can be defined a preferred job sequence for a trouble-free operation or one or more alternate job sequences in the event of potential malfunctions.

12. Apparatus according to one of the preceding claims 10 or 11, characterized in that the controller processes the strategic input data into functional units (1-11, 47), wherein any one of these units taken alone is sufficient for executing the job(s) defined by the unit.

13. Apparatus according to one of the preceding claims 10 to 12, characterized in that the controller is constructed in such a way that the groups of object-related input data (21-25, 3 1, 40-43) can be temporarily stored in arbitrary order in an intermediate storage (33) of the controller.

14. Apparatus according to claim 13, characterized in that the controller is constructed in such a way that the intermediate storage (33) is repeatedly searched for groups of object-oriented input data (21-25, 31, 40-43) which during the respective job are to be executed on the basis of the strategic input data, that the desired groups are selected based on their characterizing features, recalled from the intermediate storage (33) and used for controlling the EDM machine (37).

15. Apparatus according to claims 13 and 14, characterized in that the controller is constructed in such a way that optionally, during the operation of the EDM machine (37), additional object-oriented input data can be entered and/or input data relating to already existing object-oriented input data (21-25, 31, 40-43) can be changed.

16. Apparatus according to one of the preceding claims 10 to 15, characterized in that the controller is constructed in such a way that the strategic input data are abstracted from the concrete application, assigned to at least one characterizing feature and can be stored in common with said feature.

17. Apparatus according to one of the preceding claims 10 to 16, characterized in that the controller is constructed in such a way that there can be continuously checked before and/or during the operation of the EDM machine (37), if the strategic input data and/or the input data directly relating to the jobs comply with an orderly operation of the EDM machine (37) and if these input data can be replaced, if necessary, by suitably preset and permanently stored input data and/or if defective input data can be transmitted by a messaging unit.

## Revendications

1. Procédé pour la commande d'une machine d'étincelage (37) à l'aide d'un dispositif de commande (35), selon lequel
a) des entrées, qui sont rapportées à un objet, c'est-à-dire qui concernent directement les différentes étapes de travail, sont rassemblées en groupes (21-25, 31, 40-43),
b) ces groupes (21-25, 31, 40-43) contiennent chacun les entrées de commande, qui sont nécessaires pour une étape individuelle de travail, notamment les données de position, de trajectoire et/ou de vitesse d'exécution des étapes de travail ;
c) l'appartenance de ces groupes (21-25, 31, 40-43) à des types déterminés d'usinage, notamment à des types déterminés de coupe, est caractérisée par des caractéristiques d'individualisation ;
d) des entrées stratégiques, c'est-à-dire concernant la séquence des étapes de travail de la machine, se référent aux caractéristiques d'individualisation des groupes d'entrées (21-25, 31, 40-43) rapportées à l'objet ;
e) sur la base d'une entrée stratégique, le dispositif de commande (35) effectue dans une mémoire intermédiaire (33) une recherche de groupes d'entrées (21-25, 31, 40-43) rapportées à l'objet, avec une caractéristique correspondante d'individualisation ;
f) le dispositif de commande (35) met à exécution des groupes d'entrées ainsi trouvés (21-25, 31, 40-43) rapportées à l'objet, du même type d'usinage ; et
g) une succession de types d'usinage différents est fixée à l'aide d'une multiplicité d'entrées stratégiques.

2. Procédé selon la revendication 1, caractérisé en ce qu'une séquence des étapes de travail, qui est préférée pour un fonctionnement non perturbé ou une ou plusieurs séquences alternatives des étapes de travail pour l'introduction de perturbations potentielles sont fixées au moyen des entrées stratégiques.

3. Procédé selon l'une des revendications précédentes, caractérisé en ce que les entrées stratégiques sont subdivisées en des unités fonctionnelles (1-11, 47), dont chacune considérée en soi suffit pour exécuter la ou les étapes de travail fixées par ces unités.

4. Procédé selon l'une des revendications précédentes, caractérisé en ce que des groupes d'entrées (21-25, 31, 40-43) rapportées à l'objet sont mémorisés temporairement, selon une séquence quelconque, dans une mémoire intermédiaire (33) du dispositif de commande (37).

5. Procédé selon la revendication 4, caractérisé en ce que le dispositif de commande (35) exécute au moins une fois, dans la mémoire intermédiaire (33), une recherche des groupes d'entrées (21-25, 31, 40-43) rapportées à l'objet, qui doivent être exécutés dans l'étape de travail respective sur la base des entrées stratégiques, sélectionne les groupes désirés sur la base de leur caractéristique d'individualisation, les appelle à partir de la mémoire intermédiaire (33) et les utilise pour la commande de la machine d'étincelage (37).

6. Procédé selon la revendication 4, caractérisé en ce que le dispositif de commande (35) recherche d'une manière répétée, dans la mémoire intermédiaire (33), les groupes d'entrées (21-25, 31, 40-43) rapportées à l'objet, qui doivent être exécutés dans l'étape de travail respective sur la base des entrées stratégiques, sélectionne les groupes désirés sur la base de leurs caractéristiques d'individualisation et, les appelle à partir de la mémoire intermédiaire (33) et les utilise pour commander la machine d'étincelage.

7. Procédé selon l'une des revendications précédentes, caractérisé en ce que pendant le fonctionnement de la machine d'étincelage (37), d'autres entrées rapportées à l'objet et/ou des entrées concernant la variation d'entrées (21-25, 31, 40-43) rapportées à l'objet, déjà existantes, sont réalisées au choix pendant le fonctionnement de la machine d'étincelage (37).

8. Procédé selon l'une des revendications précédentes, caractérisé en ce que les entrées stratégiques sont tirées d'un cas d'application concret, sont associées à au moins une caractéristique d'individualisation et sont mémorisées en commun avec cette caractéristique.

9. Procédé selon l'une des revendications précédentes, caractérisé en ce qu'à l'aide du dispositif de commande (35) on vérifie en permanence avant et/ou pendant le fonctionnement de la machine d'étincelage (37), si les entrées stratégiques et/ou les entrées concernant directement les étapes de travail, doivent être accordées avec un fonctionnement correct de la machine d'étincelage, et si elles sont éventuellement remplacées par des entrées appropriées prédéterminées et mémorisées d'une manière durable et/ou si des entrées défectueuses sont communiquées par l'intermédiaire d'un dispositif de communication.

10. Procédé pour commander une machine d'étincelage (37), notamment pour la mise en oeuvre de l'un des procédés décrits dans les revendications précédentes, et qui contient respectivement au moins un dispositif d'entrée et un dispositif de calcul (35), qui est agencé de telle sorte que
a) des entrées, qui sont rapportées à un objet, c'est-à-dire qui concernent directement les différentes étapes de travail, peuvent être rassemblées en groupes (21-25, 31, 40-43), de telle sorte que ces groupes (21-25, 31, 40-43) contiennent chacun les entrées de commande, qui sont nécessaires pour une étape individuelle de travail, notamment les données de position, de trajectoire et/ou de vitesse d'exécution des étapes de travail ;
b) l'appartenance des ces groupes (21-25, 31, 40-43) à des types déterminés d'usinage, notamment à des types déterminés de coupe, peut être caractérisée par des caractéristiques réalisant une individualisation ;
c) au moyen d'entrées stratégiques, c'est-à-dire concernant la séquences des étapes de travail de la machine, on se référent aux caractéristiques d'individualisation des groupes d'entrées (21-25, 31, 40-43) rapportées à l'objet ;
d) d) sur la base d'une entrée stratégique, le dispositif de commande (35) effectue dans une mémoire intermédiaire (33) une recherche de groupes d'entrées (21-25, 31, 40-43) rapportées à l'objet, avec une caractéristique correspondante d'individualisation,
e) le dispositif de commande (35) met à exécution des groupes d'entrées ainsi trouvés (21-25, 31, 40-43) rapportées à l'objet, du même type d'usinage ; et
f) une succession de types d'usinage différents est fixée à l'aide d'une multiplicité d'entrées stratégiques.

11. Dispositif selon la revendication 10, caractérisé en ce que le dispositif de calcul est agencé de telle sorte qu'une séquence des étapes de travail, qui est préférée pour un fonctionnement non perturbé, ou une ou plusieurs séquences alternatives des étapes de travail pour l'introduction de perturbations potentielles peuvent être fixées sur la base des entrées stratégiques.

12. Dispositif selon l'une des revendications précédentes 10 ou 11, caractérisé en ce que le dispositif de commande traite les entrées stratégiques dans des unités fonctionnelles (1-11, 47), dont chacune suffit en soi pour exécuter la/les étapes de travail fixées par ces unités.

13. Dispositif selon l'une des revendications précédentes 10 à 12, caractérisé en ce que le dispositif de commande est agencé de telle sorte que les groupes d'entrées (21-25, 31, 40-43) rapportées à l'objet peuvent être mémorisés temporairement, selon une séquence quelconque, dans une mémoire intermédiaire (33) du dispositif de commande (37).

14. Dispositif selon la revendication 13, caractérisé en ce que le dispositif de commande est agencé de telle sorte qu'une recherche de groupes d'entrées (21-25, 31, 40-43) rapportées à l'objet, qui doivent être exécutés pendant l'étape de travail respectives sur la base des entrées stratégiques, est effectuée de façon répétée dans la mémoire intermédiaire (33), les groupes désirés sont sélectionnés sur la base de leurs caractéristiques d'individualisation, peuvent être appelés à partir de la mémoire intermédiaire (33) et peuvent être utilisés pour la commande de la machine d'étincelage (37).

15. Dispositif selon les revendications 13 et 14, caractérisé en ce que le dispositif de commande est agencé de telle sorte que pendant le fonctionnement de la machine d'étincelage (37), d'autres entrées rapportées à l'objet et/ou des entrées concernant la variation d'entrées (21-25, 31, 40-43) rapportées à l'objet, déjà existantes, peuvent être réalisées au choix pendant le fonctionnement de la machine d'étincelage (37).

16. Dispositif selon l'une des revendications précédentes 10 à 15, caractérisé en ce que le dispositif de commande est agencé de telle sorte que les entrées stratégiques sont tirées d'un cas d'application concret, sont associées à au moins une caractéristique d'individualisation et peuvent être mémorisées en commun avec cette caractéristique.

17. Dispositif selon l'une des revendications précédentes 10 à 16, caractérisé en ce que le dispositif de calcul est agencé de telle sorte qu'une vérification est exécutée en permanence avant et/ou pendant le fonctionnement de la machine d'étincelage (37), pour savoir si les entrées stratégiques et/ou les entrées concernant directement les étapes de travail, doivent être accordées avec un fonctionnement correct de la machine d'étincelage, et si elles sont éventuellement remplacées par des entrées appropriées prédéterminées et mémorisées d'une manière durable et/ou si des entrées défectueuses peuvent être communiquées par l'intermédiaire d'un dispositif de communication.
